# EUROPEAN PATENT SPECIFICATION

(11) **EP 3 919 289 B1**
(45) Date of publication and mention of the grant of the patent: **25.06.2025**
(21) Application number: 21170366.5
(22) Date of filing: 26.04.2021
(51) Int. Cl.: B60C 1/00, C08L 7/00, C08L 9/06, B60C 11/00, B60C 11/03, B60C 11/12

(54) **PNEUMATIC TIRE**
LUFTREIFEN
PNEUMATIQUE

(30) Priority: 04.06.2020 JP 2020097668
(43) Date of publication of application: 08.12.2021
(73) Proprietor: Sumitomo Rubber Industries, Ltd., Kobe-shi, Hyogo-ken 651-0072 (JP)
(72) Inventor: MUKOGUCHI, Daiki, Kobe-shi, 651-0072 (JP)
(74) Representative: Manitz Finsterwald Patent- und Rechtsanwaltspartnerschaft mbB

(56) References cited:
- EP-A1- 3 254 872
- EP-A1- 3 279 011
- EP-A1- 3 626 481
- EP-A1- 3 640 056
- JP-A- 2019 183 101
- JP-B2- 6 229 284
- US-A1- 2019 168 542

## Description

### BACKGROUND OF THE INVENTION

### Field of the Invention

The present invention relates to a pneumatic tire.

### Description of the Background Art

In recent years, with the increase in speeds of vehicles, there has been an increasing demand for improvement of steering stability during high-speed cornering on a wet road surface in pneumatic tires (hereinafter, also referred to simply as "tires").

Under these circumstances, studies on tread rubber (Japanese Patent No. 4827424, Japanese Laid-Open Patent Publication No. 2019-183101), studies on tread shape (Japanese Laid-Open Patent Publication Nos. 2017-19494 and 2019-1322), etc., have been conducted. Further prior art tires and pneumatic tires are disclosed in the following documents US 2019 / 168 542 A1, EP 3 626 481 A1, EP 3 254 872 A1, EP 3 640 056 A1, EP 3 279 011 A1, JP 6 229 284 B2 and JP 2019 183 101 A.

However, with the above-described conventional techniques, the steering stability during high-speed cornering on a wet road surface cannot be considered to be sufficiently improved, and further improvement is required.

Therefore, an object of the present invention to provide a pneumatic tire having sufficiently improved steering stability during high-speed cornering on a wet road surface as compared to the conventional art.

### SUMMARY OF THE INVENTION

The present inventor has conducted an intensive study to solve the above problem, has found that the problem can be solved by the invention described below, and has completed the present invention.

A first aspect of the invention is directed to a pneumatic tire including a tread having two or more circumferential main grooves formed thereon so as to continuously extend in a tire circumferential direction, wherein
when the tread is divided into two regions with a tire equator plane as a boundary, totals of areas of the circumferential main grooves in the respective regions in a ground-contact surface are different from each other, and
the tire is mounted on the vehicle so that the region where the total area of the main grooves in the circumferential direction is smaller is located outside the equatorial plane of the tire,
wherein, when a total value of the areas of the circumferential main grooves in a region in which a total of the areas of the circumferential main grooves is smaller is denoted by A, and a total value of the areas of the circumferential main grooves in a region in which a total of the areas of the circumferential main grooves is larger is denoted by B, A/B is 0.55 to 0.85,
the tread is formed from a rubber composition that contains a styrene-butadiene-based rubber having a styrene content of 30% by mass or less and a vinyl bond content of 40% by mass or less in a butadiene part thereof and an isoprene-based rubber as a rubber component and that has a loss tangent (tanδ) measured under conditions of a frequency of 10 Hz, an initial strain of 2%, and a dynamic strain rate of 1% and exhibiting a peak in a range of -20 to 10°C.

In accordance with a second aspect of the present invention, in the pneumatic tire according to the first aspect,
in the rubber composition, a butadiene-based rubber is further added as the rubber component, and
an amount of the butadiene-based rubber in 100 parts by mass of the rubber component is 10 to 30 parts by mass.

In accordance with a third aspect of the present invention, in the pneumatic tire according to the first aspect or the second aspect,
the rubber composition contains 5 to 40 parts by mass of a resin component per 100 parts by mass of the rubber component.

In accordance with a fourth aspect of the present invention, in the pneumatic tire according to the third aspect,
the resin component is a terpene-based resin.

In accordance with a fifth aspect of the present invention, in the pneumatic tire according to any one of the first to fourth aspects,
the rubber composition contains 80 parts by mass or more of silica per 100 parts by mass of the rubber component.

In accordance with a sixth aspect of the present invention, in the pneumatic tire according to the fifth aspect,
the silica is silica having a nitrogen adsorption specific surface area not less than 150 m²/g.

In accordance with a seventh aspect of the present invention, in the pneumatic tire according to the fifth aspect or the sixth aspect,
the rubber composition contains a mercapto-based silane coupling agent.

In accordance with an eighth aspect of the present invention, in the pneumatic tire according to any one of the first to seventh aspects,
the rubber composition is a rubber composition that has a loss tangent (tanδ) measured under conditions of a frequency of 10 Hz, an initial strain of 2%, and a dynamic strain rate of 1% and exhibiting a peak in a range of -15 to 5°C.

In accordance with a ninth aspect of the present invention, in the pneumatic tire according to the eighth aspect,
the rubber composition is a rubber composition that has a loss tangent (tanδ) exhibiting a peak in a range of -13 to 0°C.

In accordance with an tenth aspect of the present invention, in the pneumatic tire according to any one of the first to ninth aspects,
the areas of the circumferential main grooves become smaller from the circumferential main groove on the equator plane side toward the circumferential main groove on an outer side of the equator plane.

In accordance with a eleventh aspect of the present invention, in the pneumatic tire according to any one of the first to tenth aspects,
the tread includes a cap rubber layer forming a tread surface, and a base rubber layer located inward of the cap rubber layer,
the cap rubber layer is formed from the rubber composition, and
a ratio Tc/Tb of a thickness Tc of the cap rubber layer to a thickness Tb of the base rubber layer is 40/60 to 60/40.

In accordance with a twelfth aspect of the present invention, in the pneumatic tire according to any one of the first to eleventh aspects,
lateral grooves and/or lateral sipes are provided on a land portion formed by the adjacent two circumferential main grooves, so as to extend in a direction traversing the land portion, and
a total of areas, in the ground-contact surface, of the lateral grooves and/or lateral sipes in the region in which the total of the areas of the circumferential main grooves is smaller than a total of areas, in the ground-contact surface, of the lateral grooves and/or lateral sipes in the region in which the total of the areas of the circumferential main grooves is larger.

According to the present invention, it is possible to provide a pneumatic tire having sufficiently improved steering stability during high-speed cornering on a wet road surface as compared to the conventional art.

### DESCRIPTION OF THE PREFERRED EMBODIMENTS

Hereinafter, the present invention will be specifically described based on an embodiment.

### [1] Characteristics of Tire According to Present Invention

First, the characteristics of the tire according to the present invention will be described.

In order to improve steering stability during high-speed cornering on a wet road surface, the present inventor has considered that each of a tread shape and a tread rubber needs to satisfy a certain condition, rather than individually conducting a study on a tread shape and a study on a tread rubber, has conducted various experiments and studies, and has completed the present invention.

Specifically, in the tire according to the present invention, first, as for the tread shape, two or more circumferential main grooves continuously extending in the tire circumferential direction are formed, and, when the tread is divided into two regions with a tire equator plane as a boundary, the totals of the areas of the circumferential main grooves in the respective regions in a ground-contact surface are different from each other.

Next, as for the tread rubber, at least one layer of rubber layers forming the tread is formed from a rubber composition that contains a styrene-butadiene-based rubber having a styrene content of 30% by mass or less and a vinyl bond content of 40% by mass or less in a butadiene part thereof and an isoprene-based rubber as a rubber component and that has a loss tangent (tanδ) measured under conditions of a frequency of 10 Hz, an initial strain of 2%, and a dynamic strain rate of 1% and exhibiting a peak in a range of -20 to 10°C.

By adopting such a tread shape and such a tread rubber, it is possible to provide a pneumatic tire having steering stability during high-speed cornering on a wet road surface that is sufficiently improved by cooperation of the tread shape and the tread rubber.

In the case where the tread is formed from a plurality of rubber layers such as a cap rubber layer and a base rubber layer, the rubber composition is preferably used for at least one layer. More preferably, the rubber composition is used for the cap rubber layer among these layers, and the ratio Tc/Tb of a thickness Tc of the cap rubber layer to a thickness Tb of the base rubber layer is 40/60 to 60/40. The thickness of each rubber layer mentioned here is a thickness measured on a tire equator plane. In the case where a main groove is present on the equator, a thickness measured at a land portion located closest to the equator is adopted.

### [2] Embodiment of Present Invention

Hereinafter, the present invention will be specifically described based on an embodiment.

### 1. Tread Shape

As described above, in a tire according to the present embodiment, two or more circumferential main grooves continuously extending in the tire circumferential direction are formed, and when a tread is divided into two regions with a tire equator plane as a boundary, the totals of the areas of the circumferential main grooves in the respective regions in a ground-contact surface are different from each other.

In the case of a tire in which, when a tread is divided into two regions with the equator plane as a boundary, the totals of the areas of the circumferential main grooves in the respective regions in a ground-contact surface are different from each other, when the tire is mounted to a vehicle such that the region in which the total of the areas is smaller is located on the outer side of the equator plane, the ground-contact area of a land portion on the outer side of the vehicle that comes into contact with the ground during high-speed cornering can be increased.

As a result, during high-speed cornering, the frictional force between the ground-contact surface of the entire outer land portion of the tire and a road surface is increased, making it easier to generate heat, so that the rubber temperature on the tread surface rises. Thus, the followability of the tire to the road surface is improved.

Meanwhile, in the region on the inner side of the equator plane in which the total of the areas of the circumferential main grooves is larger, the ground-contact pressure is lower than that on the outer side during high-speed cornering, and the groove area is larger, so that the drainage performance of the tire can be enhanced.

In the present invention, when the total value of the areas of the circumferential main grooves in the region in which the total of the areas is smaller is denoted by A, and the total value of the areas of the circumferential main grooves in the region in which the total of the areas is larger is denoted by B, if A/B is 0.55 to 0.85, the above-described followability to the road surface and the above-described drainage performance can be sufficiently exhibited. Thus, such a range of A/B is preferable.

If the areas of the circumferential main grooves become smaller from the circumferential main groove on the equator plane side toward the circumferential main groove on the outer side of the equator plane, the drainage performance of the tire can be further enhanced. Thus, such areas of the circumferential main grooves are preferable.

Also, in the case where lateral grooves and/or lateral sipes are provided on a land portion formed by the adjacent two circumferential main grooves so as to extend in a direction traversing the land portion, and the total of the areas of the lateral grooves and/or lateral sipes in the region in which the total of the areas of the circumferential main grooves is smaller is smaller than the total of the areas of the lateral grooves and/or lateral sipes in the region in which the total of the areas of the circumferential main grooves is larger, the drainage performance of the tire can be further enhanced. Thus, such a case is preferable. When the total value of the areas of the lateral grooves and/or lateral sipes in the region in which the total of the areas of the lateral grooves and/or lateral sipes is smaller (region in which the total of the areas of the circumferential main grooves is smaller) is denoted by C, and the total value of the areas of the lateral grooves and/or lateral sipes in the region in which the total of the areas of the lateral grooves and/or lateral sipes is larger (region in which the total of the areas of the circumferential main grooves is larger) is denoted by D, C/D is preferably 0.55 to 0.85 and more preferably 0.75 to 0.85 similar to A/B described above.

By synergistically exerting the effects in the respective two regions described above, steering stability during high-speed cornering on a wet road surface can be sufficiently improved.

In the present embodiment, the "circumferential main groove" refers to a groove having a cross-sectional area in the tire width direction of 10 mm² or greater.

The "ground-contact surface" refers to the outer peripheral surface of the tire that comes into contact with a road surface when the tire is rolled in a state where the tire is fitted on a normal rim, a normal internal pressure is applied to the tire, and a normal load is applied to the tire.

Here, the "normal rim" is a rim that is defined, in a standard system including a standard on which the tire is based, by the standard for each tire, and refers to, for example, the standard rim at an applicable size described in "JATMA YEAR BOOK" in the JATMA (Japan Automobile Tyre Association, Inc.) standard, the "Measuring Rim" described in STANDARDS MANUAL" in the ETRTO (The European Tyre and Rim Technical Organization) standard, or the "Design Rim" described in "YEAR BOOK" in the TRA (The Tire and Rim Association, Inc.) standard.

The "normal internal pressure" is an air pressure that is defined by the standard for each tire, and refers to the maximum air pressure in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

Moreover, the "normal load" is a load that is defined for each tire by each standard in a standard system including a standard on which the tire is based, refers to the maximum mass that is permitted to be applied to the tire, and is the maximum load capacity in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

In the present embodiment, the same can also be considered in the case where the circumferential main grooves, the lateral grooves, the lateral sipes, etc., are formed in a zigzag shape. In addition, the same can also be considered in the case where the circumferential main grooves, the lateral grooves, the lateral sipes, etc., are formed only on one of sides between which the tire equator is located. Moreover, in the case where the circumferential main grooves, the lateral grooves, the lateral sipes, etc., are formed on the tire equator, the areas thereof are divided into the areas included in the respective two regions between which the tire equator is located.

### 2. Tread Rubber

Next, in the tire according to the present embodiment, as described above, at least one layer of rubber layers forming the tread is formed from a rubber composition that contains a styrene-butadiene-based rubber having a styrene content of 30% by mass or less and a vinyl bond content of 40% by mass or less in a butadiene part thereof and an isoprene-based rubber as a rubber component and that has a loss tangent (tanδ) measured under conditions of a frequency of 10 Hz, an initial strain of 2%, and a dynamic strain rate of 1% and exhibiting a peak in a range of -20 to 10°C.

The styrene-butadiene-based rubber having a styrene content of 30% by mass or less and a low vinyl bond content of 40% by mass or less in a butadiene part thereof, such as SBR, has low polarity, and thus has excellent compatibility with the isoprene-based rubber such as natural rubber (NR). By blending different types of rubbers having good compatibility as described above to form a rubber component, both followability to a road surface and friction with the road surface can be realized at the same time.

Furthermore, by designing the tread rubber such that the loss tangent (tan δ) exhibits a peak in a range of -20 to 10°C, that is, by designing a glass transition temperature Tg to be high, the viscosity of the tread rubber can be increased during high-speed cornering in which input is applied to the rubber at high frequency. Thus, good steering stability can be expected, and steering stability during high-speed cornering on a wet road surface can be further improved.

In the present embodiment, tanδ can be measured by using, for example, the "EPLEXOR (registered trademark)" viscoelasticity measurement device manufactured by NETZSCH-Geratebau GmbH. The peak temperature of tanδ described above is more preferably in a range of -15 to 0°C and further preferably in a range of -13 to 0°C.

As described above, in the present embodiment, by appropriately setting the shape of the tread and the physical properties of the tread rubber, steering stability during high-speed cornering on a wet road surface can be improved.

In the present embodiment, from the viewpoint of the wear resistance of the tire, the peak temperature Tp of tanδ of the rubber composition, the ratio A/B of the areas of the circumferential main grooves, the ratio Tc/Tb of the thickness Tc of the cap rubber layer to the thickness Tb of the base rubber layer, and the ratio C/D of the areas of the lateral grooves and/or lateral sipes more preferably satisfy the following relationships.

In other words, the ground-contact area of the tire and the viscosity of the rubber are related to the frictional force between the tire and a road surface during running, and the magnitude of this frictional force greatly affects the wear resistance of the tire.

Specifically, for example, when the relationship between Tp (peak temperature) and A/B (ratio of the areas of the circumferential main grooves) is considered, if Tp, which is related to Tg (glass transition temperature), is increased, the viscosity of the tread rubber becomes higher, so that sufficient wear resistance can be ensured even during high-speed cornering on a wet road surface. On the other hand, if A/B is decreased, the tire constantly comes into contact with a road surface with a large ground-contact area, so that it is difficult to ensure sufficient wear resistance. Therefore, from the viewpoint of the wear resistance of the tire, |Tp×(A/B)| is preferably 9.0 to 16.5. |Tp×(A/B)| is more preferably 10.5 to 15.0 and further preferably 12.0 to 13.5.

The same can also be considered when the relationship between Tp (peak temperature) and C/D (ratio of the areas of the lateral grooves and/or lateral sipes) is considered. Thus, from the viewpoint of the wear resistance of the tire, |Tp×(C/D)| is preferably 9.0 to 16.5. |Tp×(C/D)| is more preferably 10.5 to 15.0 and further preferably 12.0 to 13.5.

When the relationship between Tp (peak temperature) and Tc/Tb (ratio of the thickness Tc of the cap rubber layer to the thickness Tb of the base rubber layer) is considered, if Tc/Tb is excessively low (the cap rubber layer is excessively thin), the cap rubber layer is worn quickly. Thus, Tp is preferably increased to increase the viscosity of the tread rubber in the cap rubber layer, and, specifically, as for Tp and (Tc/Tb), |Tp×(Tc/Tb)| is preferably 8.5 to 20.0. |Tp×(Tc/Tb)| is more preferably 10.0 to 18.5, further preferably 11.5 to 17.0, and particularly preferably 13.0 to 15.5.

When the relationship between A/B (ratio of the areas of the circumferential main grooves) and C/D (ratio of the areas of the lateral grooves and/or lateral sipes) is considered, from the viewpoint of ensuring stable drainage performance, A/B and C/D are preferably values that are close to each other, and, specifically, (A/B)/(C/D) is preferably 0.55 to 0.72. (A/B)/(C/D) is more preferably 0.58 to 0.69 and further preferably 0.61 to 0.66.

When the relationship between A/B (ratio of the areas of the circumferential main grooves) and Tc/Tb (ratio of the thickness Tc of the cap rubber layer to the thickness Tb of the base rubber layer) is considered, from the viewpoint of ensuring stable drainage performance, preferably, A/B is lower and Tc/Tb is higher, and, specifically, (A/B)×(Tc/Tb) is preferably 0.50 to 1.22. (A/B)×(Tc/Tb) is more preferably 0.65 to 1.07 and further preferably 0.80 to 0.92.

Similarly, when the relationship between C/D (ratio of the areas of the lateral grooves and/or lateral sipes) and Tc/Tb (ratio of the thickness Tc of the cap rubber layer to the thickness Tb of the base rubber layer) is considered, from the viewpoint of ensuring stable drainage performance, preferably, C/D is lower and Tc/Tb is higher, and, specifically, (C/D)×(Tc/Tb) is preferably 0.50 to 1.22. (C/D)×(Tc/Tb) is more preferably 0.65 to 1.07 and further preferably 0.80 to 0.92.

### 3. Tread Rubber Composition

### (1) Blending Materials of Rubber Composition

The above-described tread rubber can be produced from a rubber composition by using a rubber component described below and other blending materials.

### (a) Rubber Component

As a rubber component, a diene-based rubber is preferably contained. Examples of specific diene-based rubbers include isoprene-based rubber (IR), butadiene rubber (BR), styrene-butadiene rubber (SBR), acrylonitrile butadiene rubber (NBR), chloroprene rubber (CR), isobutylene-isoprene-rubber (IIR), and styrene-isoprene-butadiene copolymer rubber (SIBR). These rubbers may be used individually, or two or more of these rubbers may be used in combination.

### (i) Isoprene-Based Rubber

In the case where the rubber composition contains an isoprene-based rubber, the amount (total amount) of the isoprene-based rubber in 100 parts by mass of the rubber component is, for example, 10 to 60 parts by mass, and more preferably 20 to 40 parts by mass. With such an amount, an SBR phase and an isoprene-based rubber phase can form a co-continuous structure, so that there is no local difference in hardness in the rubber, and followability to a road surface can be enhanced.

Examples of specific isoprene-based rubbers include natural rubber (NR), isoprene rubber (IR), reformed NR, modified NR, and modified IR.

As the NR, for example, NRs that are generally used in the tire industry, such as SIR20, RSS#3, and TSR20, can be used. The IR is not particularly limited, and, as the IR, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination.

### (ii) SBR

In the case where the rubber composition contains an SBR, the amount of the SBR in 100 parts by mass of the rubber component is, for example, 50 to 60 parts by mass. The weight-average molecular weight of the SBR is, for example, 100 thousand to 2 million. As for the SBR used in the present embodiment, the styrene content thereof is not greater than 30% by mass, more preferably not greater than 28% by mass, and further preferably not greater than 25% by mass, and a vinyl bond content (1,2-bond butadiene unit content) in a butadiene part thereof is not greater than 40% by mass, more preferably not greater than 35% by mass, and further preferably not greater than 30% by mass. SBR structure identification (measurement of styrene content and vinyl bond content) can be performed by using, for example, a JNM-ECA series device manufactured by JEOL Ltd.

The SBR is not particularly limited, and, for example, an emulsion-polymerized styrene-butadiene rubber (E-SBR), a solution-polymerized styrene-butadiene rubber (S-SBR), etc., can be used. The SBR may either be an unmodified SBR or a modified SBR.

The modified SBR only has to be an SBR having a functional group that interacts with a filler such as silica, and examples of such a modified SBR include a terminal-modified SBR obtained by modifying at least one terminal of an SBR with a compound (modifier) having the functional group (a terminal-modified SBR having the functional group at a terminal thereof), a main chain-modified SBR having the functional group in the main chain thereof, a main chain/terminal-modified SBR having the functional group in the main chain and at a terminal thereof (for example, a main chain/terminal-modified SBR that has the functional group in the main chain thereof and in which at least one terminal thereof is modified with the modifier), and a terminal-modified SBR that is modified (coupled) by using a multifunctional compound having two or more epoxy groups in the molecule thereof and to which a hydroxyl group or an epoxy group is introduced.

Examples of the above-described functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. These functional groups may have a substituent.

As the modified SBR, for example, an SBR modified with a compound (modifier) represented by the following (Formula 1) can be used.

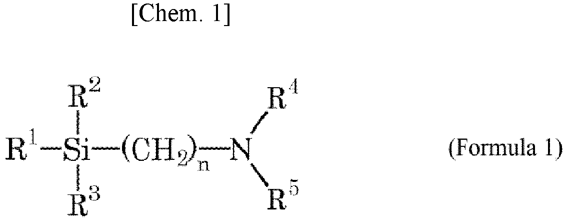

In the formula, R¹, R², and R³ are the same or different from each other, and each represent an alkyl group, an alkoxy group, a silyloxy group, an acetal group, a carboxyl group (-COOH), a mercapto group (-SH), or a derivative thereof. R⁴ and R⁵ are the same or different from each other, and each represent a hydrogen atom or an alkyl group. R⁴ and R⁵ may be linked together to form a ring structure together with a nitrogen atom. "n" represents an integer.

As the modified SBR modified with the compound (modifier) represented by the above formula, an SBR obtained by modifying the polymerization terminals (active terminals) of a solution-polymerized styrene-butadiene rubber (S-SBR) with the compound represented by the above formula (modified SBR disclosed in Japanese Laid-Open Patent Publication No. 2010-111753, etc.) can be used.

As R¹, R², and R³, an alkoxy group is suitable (an alkoxy group preferably having 1 to 8 carbon atoms, more preferably 1 to 4 carbon atoms). As R⁴ and R⁵, an alkyl group (preferably, an alkyl group having 1 to 3 carbon atoms) is suitable. The integer "n" is preferably 1 to 5, more preferably 2 to 4, and further preferably 3. In addition, when R⁴ and R⁵ are linked together to form a ring structure together with the nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the modifier include 2-dimethylaminoethyl trimethoxysilane, 3-dimethylaminopropyl trimethoxysilane, 2-dimethylaminoethyl triethoxysilane, 3-dimethylaminopropyl triethoxysilane, 2-diethylaminoethyl trimethoxysilane, 3-diethylaminopropyl trimethoxysilane, 2-diethylaminoethyl triethoxysilane, and 3-diethylaminopropyl triethoxysilane. These compounds may be used individually, or two or more of these compounds may be used in combination.

As the modified SBR, a modified SBR modified with the following compound (modifier) can also be used. Examples of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3,-bisaminomethylcyclohexane; amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane; sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl] sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide; N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover, N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Modification with the above compounds (modifiers) can be carried out by a known method.

As the SBR, for example, SBRs manufactured by and available from SUMITOMO CHEMICAL COMPANY, LIMITED, JSR Corporation, Asahi Kasei Corporation, Zeon Corporation, Versalis S.p.A., etc., can be used. These SBRs may be used individually, or two or more of these SBRs may be used in combination. In the case where two or more SBRs are used in combination, the weight average of each SBR is used for the above-described styrene content, vinyl bond content, etc.

### (iii) BR

The rubber composition may contain a BR in addition to the SBR. In the case where the rubber composition contains a BR, the amount of the BR in 100 parts by mass of the rubber component is, for example, 10 to 30 parts by mass, and more preferably 15 to 25 parts by mass. The weight-average molecular weight of the BR is, for example, 100 thousand to 2 million, more preferably 400 thousand to 1.5 million, and further preferably 700 thousand to 1 million. The vinyl bond content of the BR is, for example, 1 to 30% by mass, more preferably 5 to 25% by mass, and further preferably 10 to 20% by mass. The cis content of the BR is, for example, 1 to 98% by mass, more preferably 20 to 80% by mass, and further preferably 40 to 60% by mass. The trans content of the BR is, for example, 1 to 60% by mass, more preferably 15 to 45% by mass, and further preferably 25 to 35% by mass.

The BR is not particularly limited, and a BR having a high cis content (a cis content of 90% or higher), a BR having a low cis content, a BR containing syndiotactic polybutadiene crystals, etc., can be used. The BR may be either an unmodified BR or a modified BR, and an example of the modified BR is a modified BR into which the aforementioned functional group is introduced. These BRs may be used individually, or two or more of these BRs may be used in combination. The cis content can be measured by infrared absorption spectrometry.

As the BR, for example, products of Ube Industries, Ltd., JSR Corporation, Asahi Kasei Corporation, Zeon Corporation, etc., can be used.

### (b) Blending Materials Other Than Rubber Component

### (i) Silica

The rubber composition preferably contains silica. Specifically, the nitrogen adsorption specific surface area (N₂SA) of the silica is preferably not less than 150 m²/g, more preferably not less than 180 m²/g, and further preferably not less than 200 m²/g. The amount of the silica per 100 parts by mass of the rubber component is preferably not less than 80 parts by mass, more preferably not less than 120 parts by mass, and further preferably not less than 140 parts by mass. The N₂SA of the silica is a value measured by the BET method according to ASTM D3037-93. The upper limit of the N₂SA of the silica is not particularly limited, but is, for example, preferably about 300 m²/g, more preferably about 280 m²/g, and further preferably about 250 m²/g. In addition, the upper limit of the amount of the silica per 100 parts by mass of the rubber component is also not particularly limited as long as the rubber composition can be kneaded, but, for example, the upper limit of the amount of the silica is preferably about 200 parts by mass, more preferably about 180 parts by mass, and further preferably about 160 parts by mass.

By setting the amount of the silica to 80 parts by mass or more per 100 parts by mass of the rubber component so as to be larger than the styrene content and the vinyl bond content in the SBR, aggregation of the silica near the styrene and vinyl parts in the SBR, which causes a local difference in hardness, can be prevented, so that the followability of the tire to a road surface can be enhanced.

Examples of specific silicas include dry-process silica (anhydrous silica) and wet-process silica (hydrous silica). Between them, wet-process silica is preferable for the reason that it has a higher silanol group content. For example, products of Degussa, Rhodia, Tosoh Silica Corporation, Solvay Japan, Ltd., Tokuyama Corporation, etc., can be used.

### (ii) Silane Coupling Agent

The rubber composition preferably contains a silane coupling agent together with the silica. The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive Performance Materials, Inc.; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used individually, or two or more of these silane coupling agents may be used in combination.

A preferable amount of the silane coupling agent per 100 parts by mass of the silica is, for example, 4.5 to 7.0 parts by mass, preferably 5.0 to 6.5 parts by mass, and more preferably 5.5 to 6.0 parts by mass. As specific silane coupling agents, for example, products of Degussa, Momentive Performance Materials, Inc., Shin-Etsu Silicones, Tokyo Chemical Industry Co., Ltd., AZmax.co, Dow Corning Toray Co., Ltd., etc., can be used.

Among them, a highly reactive mercapto-based silane coupling agent is particularly preferable for the reason that it is possible to improve the dispersion of silica and increase the peak value of tanδ (tanδ at high frequency), and high-speed wet performance can be improved.

### (iii) Carbon Black

The rubber composition preferably contains carbon black. The amount of the carbon black per 100 parts by mass of the rubber component is, for example, 1 to 200 parts by mass, preferably 50 to 150 parts by mass, and more preferably 80 to 120 parts by mass.

The carbon black is not particularly limited, and examples of the carbon black include: furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; channel black (channel carbon black) such as EPC, MPC, and CC; and graphite. These carbon blacks may be used individually, or two or more of these carbon blacks may be used in combination.

The nitrogen adsorption specific surface area (N₂SA) of the carbon black is, for example, 30 to 250 m²/g, preferably 70 to 200 m²/g, and more preferably 120 to 150 m²/g. The dibutyl phthalate (DBP) absorption amount of the carbon black is, for example, 50 to 250 ml/100 g, preferably 80 to 200 ml/100 g, and more preferably 120 to 150 ml/100 g. The nitrogen adsorption specific surface area of the carbon black is measured according to ASTM D4820-93, and the DBP absorption amount of the carbon black is measured according to ASTM D2414-93.

The carbon black is not particularly limited, and specific examples of the carbon black include N134, N110, N220, N234, N219, N339, N330, N326, N351, N550, and N762. As commercially available products, products of Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon Co., etc., can be used. These carbon blacks may be used individually, or two or more of these carbon blacks may be used in combination.

### (iv) Resin Component

The rubber composition preferably contains a resin component, whereby Tg is allowed to be designed to be high. The amount of the resin component per 100 parts by mass of the rubber component is preferably 5 to 40 parts by mass, more preferably 15 to 35 parts by mass, and further preferably 25 to 30 parts by mass. By containing the resin component in such a range that the amount thereof is smaller than the styrene content and the vinyl bond content, formation of minute domains of the resin by interaction with the SBR in a matrix can be prevented.

From the viewpoint of wet grip performance, the softening point of the resin component is preferably not lower than 60°C, more preferably not lower than 65°C, and further preferably not lower than 70°C. In addition, from the viewpoint of wet grip performance at low temperature, the softening point of the resin component is preferably not higher than 150°C, more preferably not higher than 140°C, and further preferably not higher than 130°C. The softening point of the resin is a softening point that is measured with a ring and ball softening point measuring device according to JIS K6220-1: 2001 and that is a temperature at which a ball has descended.

The resin component is not particularly limited, and examples of the resin component include petroleum resins, terpene-based resins, rosin-based resins, phenol-based resins, etc., all of which are commonly used in the tire industry. These resin components may be used individually, or two or more of these resin components may be used in combination. Among them, terpene-based resins are preferably used, and may be used in combination with another resin.

The terpene-based resins have good compatibility with isoprene-based rubber, and makes it difficult to form minute domains in the system. Therefore, stress concentration is easily reduced and wear resistance at low temperature can be improved. In addition, since the terpene-based resins have good compatibility with isoprene-based rubber, the inside of the system is made uniform, so that the peak temperature of tanδ can be increased, and heat generation properties when input is applied at high frequency can be improved.

Examples of the terpene-based resins include polyterpenes, terpene phenols, and aromatic modified terpene resins. The polyterpenes are resins obtained by polymerizing terpene compounds, and hydrogenated products thereof. The above terpene compounds are hydrocarbons represented by a composition of (C₅H₈)ₙ and oxygenated derivatives thereof, and are compounds having, as a basic backbone, a terpene classified into monoterpene (C₁₀H₁₆), sesquiterpene (C₁₅H₂₄), diterpene (C₂₀H₃₂), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpenes include terpene resins formed from the above-described terpene compounds such as α-pinene resin, β-pinene resin, limonene resin, dipentene resin, and β-pinene-limonene resin, and hydrogenated terpene resins obtained by hydrogenating the terpene resins. Examples of the terpene phenols include resins obtained by copolymerization of the above terpene compound and a phenolic compound, and resins obtained by hydrogenating the resins, and specific examples of the terpene phenols include resins obtained by condensation of the above terpene compound, a phenolic compound, and formalin. Examples of the phenolic compounds include phenol, bisphenol A, cresol, and xylenol. Examples of the aromatic modified terpene resins include resins obtained by modifying a terpene resin with an aromatic compound, and resins obtained by hydrogenating the resins. Here, the aromatic compound is not particularly limited as long as the aromatic compound is a compound having an aromatic ring. Examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone; and indene.

As commercially available terpene-based resins, for example, products of Yasuhara Chemical Co., Ltd., etc., can be used, and these products may be used individually, or two or more of these products may be used in combination.

Examples of the petroleum resins include C5-based petroleum resins, aromatic petroleum resins, and C5/C9-based petroleum resins.

The "C5-based petroleum resins" refer to resins obtained by polymerizing a C5 fraction. Examples of the C5 fraction include petroleum fractions having 4 to 5 carbon atoms such as cyclopentadiene, pentene, pentadiene, and isoprene. As the C5-based petroleum resins, dicyclopentadiene resins (DCPD resins) are suitably used.

The "aromatic petroleum resins" refer to resins obtained by polymerizing a C9 fraction, and may be hydrogenated or modified products of the resins. Examples of the C9 fraction include petroleum fractions having 8 to 10 carbon atoms such as vinyltoluene, alkylstyrene, indene, and methylindene. As specific examples of the aromatic petroleum resins, coumarone-indene resins, coumarone resins, indene resins, aromatic vinyl-based resins are suitably used. As the aromatic vinyl-based resin, a homopolymer of α-methylstyrene or styrene or a copolymer of α-methylstyrene and styrene is preferable, and a copolymer of α-methylstyrene and styrene is more preferable, for the reason that the polymer is economic, is easily processed, and has excellent heat generation properties. As the aromatic vinyl-based resins, for example, products commercially available from Kraton Corporation, Eastman Chemical Company, etc., can be used.

The "C5/C9-based petroleum resins" refer to resins obtained by copolymerizing the C5 fraction and the C9 fraction, and may be hydrogenated or modified products of the resins. Examples of the C5 fraction and the C9 fraction include the above-described petroleum fractions. As the C5/C9-based petroleum resins, for example, products commercially available from Tosoh Corporation, Zibo Luhua Hongjin New Material Co., Ltd., etc., can be used.

The rosin-based resins are not particularly limited, and examples of the rosin-based resins include natural resin rosins, and rosin-modified resin modified by hydrogenation, disproportionation, dimerization, esterification, etc.

The phenol-based resins are not particularly limited, and examples of the phenol-based resins include phenol formaldehyde resins, alkylphenol formaldehyde resins, alkylphenol-acetylene resins, and oil-modified phenol formaldehyde resins.

### (v) Oil

The rubber composition may contain an oil. The amount of the oil per 100 parts by mass of the rubber component is, for example, 3 to 30 parts by mass, preferably 10 to 28 parts by mass, and more preferably 15 to 25 parts by mass. The amount of the oil includes the amount of oil contained in rubber (oil-extended rubber).

Examples of the oil include process oils, vegetable fats and oils, and mixtures thereof. As the process oil, for example, paraffinic process oil, aromatic process oil, naphthenic process oil, or the like can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. These oils may be used individually, or two or more of these oils may be used in combination.

As the oil, for example, products of Idemitsu Kosan Co., Ltd., Sankyo Yuka Kogyo K.K., ENEOS Corporation, Olisoy, H&R, Hokoku Corporation, Showa Shell Sekiyu K.K., FUJI KOSAN COMPANY, LTD., etc., can be used.

### (vi) Wax

The rubber composition preferably contains a wax. The amount of the wax per 100 parts by mass of the rubber component is, for example, 0.5 to 20 parts by mass, preferably 1.5 to 15 parts by mass, and more preferably 3.0 to 10.0 parts by mass.

The wax is not particularly limited, and examples of the wax include: petroleum waxes such as paraffin wax and microcrystalline wax; natural waxes such as vegetable wax and animal wax; and synthesized waxes such as polymers of ethylene, propylene, and the like. These waxes may be used individually, or two or more of these waxes may be used in combination.

As the wax, for example, products of Ouchi Shinko Chemical Industrial Co., Ltd., NIPPON SEIRO CO., LTD., Seiko Chemical Co., Ltd., etc., can be used.

### (vii) Antioxidant

The rubber composition preferably contains an antioxidant. The amount of the antioxidant per 100 parts by mass of the rubber component is, for example, 1 to 10 parts by mass, preferably 2 to 8 parts by mass, and more preferably 3 to 5 parts by mass.

Examples of the antioxidant include: naphthylamine-based antioxidants such as phenyl-α-naphthylamine; diphenylamine-based antioxidants such as octylated diphenylamine and 4,4'-bis(α,α'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. These antioxidants may be used individually, or two or more of these antioxidants may be used in combination.

As the antioxidant, for example, products of Seiko Chemical Co., Ltd., SUMITOMO CHEMICAL COMPANY, LIMITED, Ouchi Shinko Chemical Industrial Co., Ltd., Flexsys, etc., can be used.

### (viii) Stearic Acid

The rubber composition may contain stearic acid. The amount of the stearic acid per 100 parts by mass of the rubber component is, for example, 0.5 to 10.0 parts by mass, preferably 1.5 to 8.0 parts by mass, and more preferably 3.0 to 5.0 parts by mass. As the stearic acid, a conventionally known one can be used, and, for example, products of NOF Corporation, Kao Corporation, FUJIFILM Wako Pure Chemical Industries, Ltd., New Japan Chemical Co., Ltd., etc., can be used.

### (ix) Zinc Oxide

The rubber composition may contain zinc oxide. The amount of the zinc oxide per 100 parts by mass of the rubber component is, for example, 0.5 to 10 parts by mass, preferably 1.5 to 8.0 parts by mass, and more preferably 3.0 to 5.0 parts by mass. As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

### (x) Crosslinking Agent and Vulcanization Accelerator

The rubber composition preferably contains a crosslinking agent such as sulfur. The amount of the crosslinking agent per 100 parts by mass of the rubber component is, for example, 0.1 to 10.0 parts by mass, preferably 1.0 to 8.0 parts by mass, and more preferably 3.0 to 5.0 parts by mass.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, for example, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

Examples of crosslinking agents other than sulfur include: vulcanizing agents containing a sulfur atom such as TACKIROL V-200 manufactured by Taoka Chemical Co., Ltd., DURALINK HTS (1,6-hexamethylene sodium dithiosulfate dihydrate) manufactured by Flexsys, and KA9188 (1,6-bis(N,N'-dibenzylthiocarbamoyldithio)hexane) manufactured by LANXESS; and organic peroxides such as dicumyl peroxide.

The rubber composition preferably contains a vulcanization accelerator. The amount of the vulcanization accelerator per 100 parts by mass of the rubber component is, for example, 0.3 to 10.0 parts by mass, preferably 1.0 to 8.0 parts by mass, and more preferably 3.0 to 5.0 parts by mass.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination.

### (xi) Others

In addition to the above-described components, additives that are generally used in the tire industry, such as: organic peroxides; fillers such as calcium carbonate, talc, alumina, clay, aluminum hydroxide, and mica; and the like, may be further blended in the rubber composition. Each of the amounts of these additives per 100 parts by mass of the rubber component is, for example, 0.1 to 200 parts by mass.

### (2) Production of Rubber Composition

The rubber composition is produced by a general method; for example, a production method including a base kneading step of kneading a rubber component and a filler such as silica and carbon black and a finish kneading step of kneading a crosslinking agent and a kneaded product obtained in the base kneading step.

The kneading can be performed by using, for example, a known (sealed type) kneading machine such as a Banbury mixer, a kneader, and an open roll.

In the base kneading step, the kneading temperature is, for example, 50 to 200°C, and the kneading time is, for example, 30 seconds to 30 minutes. In the base kneading step, in addition to the above components, ingredients that are conventionally used in the rubber industry, for example, a softener such as oil, stearic acid, zinc oxide, an antioxidant, a wax, and a vulcanization accelerator, etc., may be added and kneaded as necessary.

In the finish kneading step, the crosslinking agent and the kneaded product obtained in the base kneading step are kneaded. In the finish kneading step, the kneading temperature is, for example, room temperature to 80°C, and the kneading time is, for example, 1 to 15 minutes. In the finish kneading step, in addition to the above components, a vulcanization accelerator, zinc oxide, etc., may be added and kneaded as necessary.

### 4. Production of Tire

The tire according to the present invention is produced by a normal method using an unvulcanized rubber composition obtained through the finish kneading step. That is, first, an unvulcanized tire is produced by extruding the unvulcanized rubber composition into the shape of each tire member of the tread and shaping the extruded rubber composition together with other tire members on a tire shaping machine by a normal method.

Specifically, an unvulcanized tire is produced by winding, on a shaping drum, an inner liner as a member for ensuring the airtightness of the tire, a carcass as a member for withstanding the load, impact, and filling air pressure received by the tire, a belt as a member for strongly tightening the carcass to increase the stiffness of a tread, etc., placing bead portions as members for fixing both ends of the carcass to both side edge portions and fixing the tire to a rim, shaping these members into a toroid shape, then attaching a tread to a center portion of the outer periphery, and attaching sidewall portions as members for protecting the carcass to withstand bending, on the radially outer side.

Thereafter, a tire is obtained by heating and pressurizing the produced unvulcanized tire in a vulcanizing machine. The vulcanization step can be carried out by applying known vulcanization means. The vulcanization temperature is, for example, 120 to 200°C, and the vulcanization time is, for example, 5 to 15 minutes.

In the present embodiment, when the cross-section width and the outer diameter of the tire in a state where the tire is fitted on the normal rim and the internal pressure thereof is adjusted to the normal internal pressure are denoted by Wt (mm) and Dt (mm), respectively, the tire preferably satisfies 1963.4≤(Dt²×π/4)/Wt≤2827.4.

The outer diameter Dt of the tire in the above formula is the outer diameter of the tire in a state where the tire is fitted on the normal rim, the internal pressure thereof is adjusted to 250 kPa, and no load is applied to the tire. The cross-section width Wt of the tire is the width obtained by excluding patterns, characters, and the like on the side surfaces of the tire from the linear distance between sidewalls which include all such patterns and characters on the side surfaces of the tire, that is, the total width of the tire, in the tire in a state where the tire is fitted on the normal rim, the internal pressure thereof is adjusted to 250 kPa, and no load is applied to the tire.

Examples of specific tires that can satisfy the above formula include tires having a size designation such as 145/60R18, 145/60R19, 155/55R18, 155/55R19, 155/70R17, 155/70R19, 165/55R20, 165/55R21, 165/60R19, 165/65R19, 165/70R18, 175/55R19, 175/55R20, 175/55R22, 175/60R18, 185/55R19, 185/60R20, 195/50R20, and 195/55R20.

These tires that satisfy the above formula are preferably applied to pneumatic tires for a passenger car, and can more preferably contribute to solving the problem in the present invention since the above formula is satisfied.

### EXAMPLES

Hereinafter, the present invention will be further specifically described by means of examples.

### [1] Experiment 1

### 1. Production of Rubber Composition

First, a rubber composition was produced.

### (1) Blending Materials

First, each blending material described below was prepared.

### (a) Rubber Component

(i) NR: TSR20
(ii) SBR 1: Europrene SOL R C3737 manufactured by Versalis S.p.A.
   (styrene content: 37% by mass, vinyl bond content: 37% by mass)
(iii) SBR 2: Europrene SOL R C2525 manufactured by Versalis S.p.A.
   (styrene content: 25% by mass, vinyl bond content: 25% by mass)
(iv) SBR 3: modified S-SBR produced according to a method described in the next paragraph (styrene content: 28% by mass, vinyl bond content: 56% by mass)
(v) BR: BR150B manufactured by Ube Industries, Ltd.

The above SBR 3 was produced according to a procedure described below. A nitrogen-purged autoclave reactor was charged with cyclohexane, tetrahydrofuran, styrene, and 1,3-butadiene. The temperature of the contents of the reactor was adjusted to 20°C, and then n-butyllithium was added to initiate polymerization. The polymerization was carried out under heat insulating conditions, and the maximum temperature reached 85°C. When the polymerization conversion rate reached 99%, 1,3-butadiene was added to the reaction solution, and further polymerization was carried out for 5 minutes. Thereafter, N,N-bis(trimethylsilyl)-3-aminopropyltriethoxysilane was added as a modifier to the reaction solution, and reaction was carried out. After the end of the polymerization reaction, 2,6-di-tert-butyl-p-cresol was added to the reaction solution. Subsequently, the solvent was removed by steam stripping, and drying by a heat roll adjusted to a temperature of 110°C was performed to obtain the SBR 3.

### (b) Blending Materials Other Than Rubber Component

(i) Silica: ULTRASIL VN3 manufactured by Evonik (N₂SA: 175 m²/g)
(ii) Silane coupling agent 1: Si266 manufactured by Evonik
   (bis(3-triethoxysilylpropyl)disulfide)
(iii) Silane coupling agent 2: NXT-Z45 manufactured by Momentive Performance Materials, Inc.
   (mercapto-based silane coupling agent)
(iv) Carbon black: DIABLACK N220 manufactured by Mitsubishi Chemical Corporation
(v) Oil: Diana Process AH-24 (aromatic oil) manufactured by Idemitsu Kosan Co., Ltd.
(vi) Resin 1: SYLVARES SA 85 manufactured by Kraton Corporation
   (aromatic vinyl-based resin)
(vii) Resin 2: TO125 manufactured by Yasuhara Chemical Co., Ltd. (aromatic modified terpene resin)
(viii) Wax: SUNNOC WAX manufactured by Ouchi Shinko Chemical Industrial Co., Ltd.
(ix) Antioxidant: NOCRAC 6C manufactured by Ouchi Shinko Chemical Industrial Co., Ltd.
(x) Stearic acid: bead stearic acid "Camellia" manufactured by NOF Corporation
(xi) Zinc oxide: Zinc Oxide Type-1 manufactured by Mitsui Mining & Smelting Co., Ltd.
(xii) Crosslinking agent and vulcanization accelerator
   Sulfur: powdery sulfur manufactured by Tsurumi Chemical Industry Co., Ltd.
   Vulcanization accelerator: NOCCELER NS manufactured by Ouchi Shinko Chemical Industrial Co., Ltd.

### (2) Production of Rubber Composition

In accordance with each of the blending contents shown in Table 1, the materials other than the sulfur and the vulcanization accelerator were kneaded under a condition of 150°C for 5 minutes by using a Banbury mixer, to obtain a kneaded product. Each blending amount is in parts by mass.

**[Table 1]**

| | Blending formula 1 | Blending formula 2 | Blending formula 3 | Blending formula 4 | Blending formula 5 | Blending formula 6 | Blending formula 7 | Blending formula 8 | Blending formula 9 | Blending formula 10 | Blending formula 11 |
|---|---|---|---|---|---|---|---|---|---|---|---|
| [Rubber component] | | | | | | | | | | | |
| NR | 10 | 10 | 10 | 10 | 20 | 40 | 40 | 40 | 40 | 40 | 60 |
| SBR 1 | 60 | | 60 | | | | | | | | |
| SBR 2 | | | | 60 | 50 | 50 | 50 | 50 | 50 | 60 | 30 |
| SBR 3 | | 60 | | | | | | | | | |
| BR | 30 | 30 | 30 | 30 | 30 | 10 | 10 | 10 | 10 | | 10 |
| [Other blending materials] | | | | | | | | | | | |
| Silica | 60 | 60 | 60 | 60 | 60 | 60 | 85 | 85 | 85 | 60 | 60 |
| Coupling agent 1 | 4.8 | 4.8 | 4.8 | 4.8 | 4.8 | 4.8 | 6.8 | 6.8 | | 4.8 | 4.8 |
| Coupling agent 2 | | | | | | | | | 6.8 | | |
| Carbon black | 10 | 10 | 10 | 10 | 10 | 10 | 10 | 10 | 10 | 10 | 10 |
| Oil | 25 | 25 | 5 | 5 | 5 | 5 | 5 | 5 | 5 | 5 | 5 |
| Resin 1 | 5 | 5 | 25 | 25 | 5 | 25 | 25 | | | 25 | 5 |
| Resin 2 | | | | | | | | 25 | 25 | | |
| Wax | 2 | 2 | 2 | 2 | 2 | 2 | 2 | 2 | 2 | 2 | 2 |
| Antioxidant | 2 | 2 | 2 | 2 | 2 | 2 | 2 | 2 | 2 | 2 | 2 |
| Stearic acid | 2 | 2 | 2 | 2 | 2 | 2 | 2 | 2 | 2 | 2 | 2 |
| Zinc oxide | 3 | 3 | 3 | 3 | 3 | 3 | 3 | 3 | 3 | 3 | 3 |
| [Crosslinking agent and vulcanization accelerator] | | | | | | | | | | | |
| Sulfur | 1.5 | 1.5 | 1.5 | 1.5 | 1.5 | 1.5 | 1.5 | 1.5 | 1.5 | 1.5 | 1.5 |
| Vulcanization accelerator | 3 | 3 | 3 | 3 | 3 | 3 | 3 | 3 | 3 | 3 | 3 |
| [Peak temperature of tanδ] (°C) | | | | | | | | | | | |
| | -25 | -27 | -17 | -20 | -15 | -15 | -13 | -13 | -13 | -13 | -13 |

### 2. Production of Tire

Next, the sulfur and the vulcanization accelerator were added to the obtained tread rubber composition, and the mixture was kneaded under a condition of 80°C for 5 minutes by using an open roll, to obtain an unvulcanized rubber composition. A tread was molded from the obtained unvulcanized rubber composition with the ratio (A/B) of a total area A of circumferential grooves located on the outer side of the equator plane to a total area B of circumferential grooves located on the inner side of the equator plane being changed as shown in Table 2 and Table 3, and was attached together with other tire members to form an unvulcanized tire, and the unvulcanized tire was press-vulcanized under a condition of 170°C for 10 minutes, to produce each test tire (size: 175/80R16).

The number of circumferential main grooves was set to four, two grooves A1 and A2 were provided as circumferential grooves located on the outer side of the equator plane in this order from the equator plane side, and two grooves B1 and B2 were provided as circumferential grooves located on the inner side of the equator plane in this order from the equator plane side. In Example 11, lateral grooves and lateral sipes were provided (area ratio C/D was 0.8). In addition, in Example 12 and Example 13, a tread in which a cap rubber layer and a base rubber layer were stacked at a thickness ratio Tc/Tb shown in Table 2 was used.

### 3. Evaluation Tests

### (1) Measurement of Loss Tangent (tanδ)

For the tread rubber (after vulcanization) based on each blending formula that was cut out from each test tire, a loss tangent (tanδ) was measured, with the temperature being changed from -50°C to 15°C, under conditions of a frequency of 10 Hz, an initial strain of 2%, and a dynamic strain rate of 1% by using "EPLEXOR" manufactured by NETZSCH-Geratebau GmbH, and a peak temperature Tp was obtained. The results are also shown in Table 1.

### (2) Evaluation of Steering Stability during High-Speed Cornering on Wet Road Surface

The respective test tires were mounted to all the wheels of vehicles (front wheel drive vehicles produced in Japan and having an engine displacement of 2000 cc), the vehicles were caused to run around a test course with a wet asphalt road surface at a speed of 80 km/h, and drivers made sensory evaluation for steering stability during turning at a corner. The evaluation is indicated as an index with the evaluation result for Comparative Example 10 being regarded as 100, on the basis of the average of values given by 10 drivers. A higher value indicates that the steering stability during high-speed cornering on a wet road surface is better. The results are also shown in Table 2 and Table 3.

### (3) Evaluation of Wear Performance

Also, wear performance was evaluated.

Specifically, a volume loss amount of a test piece cut from the tread of each test tire was measured by using a LAT tester (Laboratory Abrasion and Skid Tester) under conditions of a load of 40 N, a speed of 20 km/h, and a slip angle of 5°. The volume loss amount is indicated as an index with the volume loss amount of Comparative Example 10 being regarded as 100. A higher index indicates that the volume loss amount is smaller and that the wear performance is better. The results are also shown in Table 2 and Table 3.

In Table 2 and Table 3, the calculation results of |Tp×(A/B)|, |Tp×(Tc/Tb)|, (A/B)×(C/D), and (A/B)×(Tc/Tb) are also shown.

**[Table 2]**

| Example | 1 | 2 | 3 | 4 | 5 | 6 | 7 | 8 | 9 | 10 | 11 | 12 | 13 |
|---|---|---|---|---|---|---|---|---|---|---|---|---|---|
| Rubber blending formula No. | 4 | 6 | 10 | 7 | 8 | 9 | 5 | 11 | 4 | 10 | 6 | 8 | 8 |
| Tp (°C) | -20 | -15 | -13 | -13 | -13 | -13 | -15 | -10 | -20 | -13 | -15 | -13 | -13 |
| A/B | 0.8 | 0.8 | 0.8 | 0.8 | 0.8 | 0.8 | 0.8 | 0.8 | 0.7 | 0.7 | 0.8 | 0.8 | 0.8 |
| C/D | - | - | - | - | - | - | - | - | - | - | 0.8 | 0.8 | 0.8 |
| Tc/Tb | - | - | - | - | - | - | - | - | - | - | - | 40/60 | 60/40 |
| \|Tp×(A/B)\| | 16.0 | 12.0 | 10.4 | 10.45 | 10.4 | 10.4 | 12.0 | 8.0 | 14.0 | 9.10 | 12.0 | 10.4 | 10.4 |
| \|Tp×(Tc/Tb)\| | - | - | - | - | - | - | - | - | - | - | - | 8.7 | 19.5 |
| (A/B)×(C/D) | - | - | - | - | - | - | - | - | - | - | - | 0.64 | 0.64 |
| (A/B)×(Tc/Tb) | - | - | - | - | - | - | - | - | - | - | - | 0.53 | 1.20 |
| (Evaluation results) | | | | | | | | | | | | | |
| Steering stability | 110 | 125 | 130 | 135 | 135 | 135 | 125 | 130 | 135 | 135 | 128 | 138 | 140 |
| Wear performance | 120 | 97 | 95 | 107 | 107 | 107 | 105 | 125 | 117 | 110 | 99 | 110 | 112 |

**[Table 3]**

| Comparative Example | 1 | 2 | 3 | 4 | 5 | 6 | 7 | 8 | 9 | 10 |
|---|---|---|---|---|---|---|---|---|---|---|
| Rubber blending formula No. | Blending formula 1 | Blending formula 1 | Blending formula 2 | Blending formula 3 | Blending formula 4 | Blending formula 3 | Blending formula 6 | Blending formula 7 | Blending formula 8 | Blending formula 9 |
| Tp (°C) | -25 | -25 | -27 | -17 | -20 | -17 | -15 | -13 | -13 | -13 |
| A/B | 1.2 | 0.8 | 0.8 | 1.2 | 1.2 | 0.8 | 1.2 | 1.2 | 1.2 | 1.2 |
| \|Tp×(A/B)\| | 30.0 | 20.0 | 21.6 | 20.4 | 24.0 | 13.6 | 18.0 | 15.6 | 15.6 | 15.6 |
| (Evaluation results) | | | | | | | | | | |
| Steering stability | 87 | 96 | 94 | 96 | 74 | 100 | 91 | 100 | 100 | 100 |
| Wear performance | 95 | 95 | 98 | 81 | 98 | 81 | 92 | 100 | 100 | 100 |

From Table 2 and Table 3, it is found that the steering stability during high-speed cornering on a wet road surface is improved in the case where: a tread is formed from a rubber composition that contains a styrene-butadiene-based rubber having a styrene content of 30% by mass or less and a vinyl bond content of 40% by mass or less in a butadiene part thereof and an isoprene-based rubber as a rubber component and that has a loss tangent (tanδ) measured under conditions of a frequency of 10 Hz, an initial strain of 2%, and a dynamic strain rate of 1% and exhibiting a peak in a range of -20 to 10°C; and the ratio (A/B) of a total area A of circumferential grooves located on the outer side of the equator plane to a total area B of circumferential grooves located on the inner side of the equator plane is less than 1, that is, a region in which the total area is smaller is located on the outer side. In addition, it is found that the overall evaluation as the sum of steering stability and wear performance is also improved.

It is found that, for example, when the amount of the isoprene-based rubber in 100 parts by mass of the rubber component is 20 to 60 parts by mass, when the peak temperature of tanδ is -15 to 0°C, or when A/B is 0.75 to 0.85, the steering stability during high-speed cornering on a wet road surface is further improved. In addition, it is found that the overall evaluation is also further improved.

Moreover, it is found that by further providing lateral grooves and lateral sipes, the steering stability during high-speed cornering on a wet road surface and the overall evaluation are improved.

### [2] Experiment 2

Next, the influence of changes in the groove areas of the circumferential main grooves on the steering stability during high-speed cornering on a wet road surface was investigated.

Specifically, test tires of Example 14 to Example 17 were produced with the ratio of the areas of the outer circumferential grooves (A2, B2) distant from the equator plane to the areas of the inner circumferential grooves (A1, B1) close to the equator plane being changed as shown in Table 4 (A2/A1 and B2/B1 were made equal to each other) for the two circumferential grooves located on each of the inner side and the outer side of the equator plane in the tire shown in Example 6 above. These test tires were evaluated in the same manner. For all the test tires, the ratio (A/B) of the total area A of the two circumferential grooves located on the outer side of the equator plane to the total area B of the two circumferential grooves located on the inner side of the equator plane was set to the same value (0.8) as in Example 6.

**[Table 4]**

| | Example 6 | Example 14 | Example 15 | Example 16 | Example 17 |
|---|---|---|---|---|---|
| A2/A1 or B2/B1 (%) | 100 | 90 | 80 | 70 | 105 |
| (Evaluation Results) | | | | | |
| Steering stability | 135 | 140 | 145 | 150 | 135 |
| Wear performance | 107 | 110 | 113 | 115 | 105 |

From Table 4, it is found that, when the areas of the outer circumferential main grooves (A2, B2) are made smaller than the areas of the inner circumferential main grooves (A1, B1), the steering stability during high-speed cornering on a wet road surface is further improved from the result obtained in Example 6. In addition, it is found that the overall evaluation is also further improved.

Although the present invention has been described based on the embodiment, the present invention is not limited to the above embodiment. Various modifications of the above embodiment can be made within the scope identical or equivalent to that of the present invention.

## Claims

1. A pneumatic tire comprising a tread having two or more circumferential main grooves formed thereon so as to continuously extend in a tire circumferential direction, wherein
when the tread is divided into two regions with a tire equator plane as a boundary, totals of areas of the circumferential main grooves in the respective regions in a ground-contact surface are different from each other, and
the tire is mounted on the vehicle so that the region where the total area of the main grooves in the circumferential direction is smaller is located outside the equatorial plane of the tire,
wherein, when a total value of the areas of the circumferential main grooves in a region in which a total of the areas of the circumferential main grooves is smaller is denoted by A, and a total value of the areas of the circumferential main grooves in a region in which a total of the areas of the circumferential main grooves is larger is denoted by B, A/B is 0.55 to 0.85,
the tread is formed from a rubber composition that contains a styrene-butadiene-based rubber having a styrene content of 30% by mass or less and a vinyl bond content of 40% by mass or less in a butadiene part thereof and an isoprene-based rubber as a rubber component and that has a loss tangent (tanδ) measured under conditions of a frequency of 10 Hz, an initial strain of 2%, and a dynamic strain rate of 1% and exhibiting a peak in a range of -20 to 10°C.

2. The pneumatic tire according to claim 1, wherein
in the rubber composition, a butadiene-based rubber is further added as the rubber component, and
an amount of the butadiene-based rubber in 100 parts by mass of the rubber component is 10 to 30 parts by mass.

3. The pneumatic tire according to claim 1 or 2, wherein the rubber composition contains 5 to 40 parts by mass of a resin component per 100 parts by mass of the rubber component.

4. The pneumatic tire according to claim 3, wherein the resin component is a terpene-based resin.

5. The pneumatic tire according to any one of claims 1 to 4, wherein the rubber composition contains 80 parts by mass or more of silica per 100 parts by mass of the rubber component.

6. The pneumatic tire according to claim 5, wherein the silica is silica having a nitrogen adsorption specific surface area not less than 150 m²/g; the nitrogen adsorption specific surface area being measured by the BET method according to ASTM D3037-93.

7. The pneumatic tire according to claim 5 or 6, wherein the rubber composition contains a mercapto-based silane coupling agent.

8. The pneumatic tire according to any one of claims 1 to 7, wherein the rubber composition is a rubber composition that has a loss tangent (tanδ) measured under conditions of a frequency of 10 Hz, an initial strain of 2%, and a dynamic strain rate of 1% and exhibiting a peak in a range of -15 to 5°C.

9. The pneumatic tire according to claim 8, wherein the rubber composition is a rubber composition that has a loss tangent (tanδ) exhibiting a peak in a range of -13 to 0°C.

10. The pneumatic tire according to any one of claims 1 to 9, wherein the areas of the circumferential main grooves become smaller from the circumferential main groove on the equator plane side toward the circumferential main groove on an outer side of the equator plane.

11. The pneumatic tire according to any one of claims 1 to 10, wherein
the tread includes a cap rubber layer forming a tread surface, and a base rubber layer located inward of the cap rubber layer,
the cap rubber layer is formed from the rubber composition, and
a ratio Tc/Tb of a thickness Tc of the cap rubber layer to a thickness Tb of the base rubber layer is 40/60 to 60/40.

12. The pneumatic tire according to any one of claims 1 to 11, wherein
lateral grooves and/or lateral sipes are provided on a land portion formed by the adjacent two circumferential main grooves, so as to extend in a direction traversing the land portion, and
a total of areas, in the ground-contact surface, of the lateral grooves and/or lateral sipes in the region in which the total of the areas of the circumferential main grooves is smaller than a total of areas, in the ground-contact surface, of the lateral grooves and/or lateral sipes in the region in which the total of the areas of the circumferential main grooves is larger.

## Patentansprüche

1. Luftreifen, umfassend einen Laufstreifen, der zwei oder mehr Umfangshauptrillen aufweist, die darauf so gebildet sind, dass sie sich durchgehend in einer Reifenumfangsrichtung erstrecken, wobei,
wenn der Laufstreifen in zwei Bereiche mit einer Reifenäquatorebene als Grenze unterteilt ist, Gesamtsummen von Flächen der Umfangshauptrillen in den jeweiligen Bereichen in einer Bodenkontakt-Oberfläche voneinander verschieden sind, und
der Reifen so am Fahrzeug montiert ist, dass der Bereich, wo die Gesamtfläche der Hauptrillen in der Umfangsrichtung kleiner ist, sich außerhalb der Äquatorebene des Reifens befindet,
wobei, wenn ein Gesamtwert der Flächen der Umfangshauptrillen in einem Bereich, in dem eine Gesamtsumme der Flächen der Umfangshauptrillen kleiner ist, mit A bezeichnet ist, und ein Gesamtwert der Flächen der Umfangshauptrillen in einem Bereich, in dem eine Gesamtsumme der Flächen der Umfangshauptrillen größer ist, mit B bezeichnet ist, A/B 0,55 bis 0,85 beträgt,
der Laufstreifen mit einer Kautschukzusammensetzung gebildet ist, die einen Styrol-Butadien-basierten Kautschuk, der einen Styrolgehalt von 30 Massen-% oder weniger und einen Vinylbindungsgehalt von 40 Massen-% oder weniger in seinem Butadien-Teil aufweist, und einen Isopren-basierten Kautschuk als eine Kautschukkomponente enthält, und die einen Verlusttangens (tanδ) aufweist, der unter Bedingungen einer Frequenz von 10 Hz, einer anfänglichen Dehnung von 2% und einer dynamischen Dehnungsrate von 1% gemessen ist und einen Peak in einem Bereich von -20 bis 10°C zeigt.

2. Luftreifen nach Anspruch 1, wobei
in der Kautschukzusammensetzung zudem ein Butadien-basierter Kautschuk als Kautschukkomponente hinzugefügt ist, und
eine Menge des Butadien-basierten Kautschuks in 100 Massenteilen der Kautschukkomponente 10 bis 30 Massenteile beträgt.

3. Luftreifen nach Anspruch 1 oder 2, wobei die Kautschukzusammensetzung 5 bis 40 Massenteile einer Harzkomponente pro 100 Massenteile der Kautschukkomponente enthält.

4. Luftreifen nach Anspruch 3, wobei die Harzkomponente ein Terpenbasiertes Harz ist.

5. Luftreifen nach einem der Ansprüche 1 bis 4, wobei die Kautschukzusammensetzung 80 Massenteile oder mehr an Siliziumdioxid pro 100 Massenteile der Kautschukkomponente enthält.

6. Luftreifen nach Anspruch 5, wobei das Siliziumdioxid Siliziumdioxid ist, das eine spezifische Stickstoffadsorptionsoberfläche von nicht weniger als 150 m²/g aufweist, wobei die spezifische Stickstoffadsorptionsoberfläche durch das BET-Verfahren gemäß ASTM D3037-93 gemessen ist.

7. Luftreifen nach Anspruch 5 oder 6, wobei die Kautschukzusammensetzung ein mercapto-basiertes Silan-Kopplungsmittel enthält.

8. Luftreifen nach einem der Ansprüche 1 bis 7, wobei die Kautschukzusammensetzung eine Kautschukzusammensetzung ist, die einen Verlusttangens (tanδ) aufweist, der unter Bedingungen einer Frequenz von 10 Hz, einer anfänglichen Dehnung von 2% und einer dynamischen Dehnungsrate von 1% gemessen ist und einen Peak in einem Bereich von -15 bis 5°C zeigt.

9. Luftreifen nach Anspruch 8, wobei die Kautschukzusammensetzung eine Kautschukzusammensetzung ist, die einen Verlusttangens (tanδ) aufweist, der einen Peak in einem Bereich von -13 bis 0°C zeigt.

10. Luftreifen nach einem der Ansprüche 1 bis 9, wobei die Flächen der Umfangshauptrillen von der Umfangshauptrille auf der Äquatorebenenseite aus zur Umfangshauptrille auf einer äußeren Seite der Äquatorebene hin kleiner werden.

11. Luftreifen nach einem der Ansprüche 1 bis 10, wobei
der Laufstreifen eine Deckkautschukschicht, die eine Laufstreifenoberfläche bildet, und eine innerseits der Deckkautschukschicht befindliche Basiskautschukschicht umfasst,
die Deckkautschukschicht mit der Kautschukzusammensetzung gebildet ist, und
ein Verhältnis Tc/Tb einer Dicke Tc der Deckkautschukschicht zu einer Dicke Tb der Basiskautschukschicht 40/60 bis 60/40 beträgt.

12. Luftreifen nach einem der Ansprüche 1 bis 11, wobei
Querrillen und/oder Quereinschnitte auf einem Positivprofilabschnitt vorgesehen sind, der durch die benachbarten zwei Umfangshauptrillen gebildet ist, so dass sie sich in einer Richtung erstrecken, die den Positivprofilabschnitt durchquert, und
eine Gesamtsumme von Flächen, in der Bodenkontakt-Oberfläche, der Querrillen und/oder Quereinschnitte in dem Bereich, in dem die Gesamtsumme der Flächen der Umfangshauptrillen kleiner ist als eine Gesamtsumme von Flächen, in der Bodenkontakt-Oberfläche, der Querrillen und/oder Quereinschnitte in dem Bereich, in dem die Gesamtsumme der Flächen der Umfangshauptrillen größer ist.

## Revendications

1. Pneumatique comprenant une bande de roulement ayant deux ou plus de deux rainures circonférentielles principales y étant formées de sorte à s'étendre de manière continue dans la direction circonférentielle du pneu, dans lequel,
lorsque la bande de roulement est divisée en deux régions avec le plan équatorial de pneu servant de limite, les totaux des surfaces des rainures circonférentielles principales dans les régions respectives dans une surface de contact avec le sol sont différents les uns des autres, et
le pneu est monté sur le véhicule de sorte que la région, où la surface totale des rainures principales dans la direction circonférentielle est la plus petite, est située à l'extérieur du plan équatorial du pneu,
dans lequel, lorsqu'une valeur totale des surfaces des rainures circonférentielles principales dans une région dans laquelle un total des surfaces des rainures circonférentielles principales est plus petit est désigné par A, et une valeur totale des surfaces des rainures circonférentielles principales dans une région dans laquelle un total des surfaces des rainures circonférentielles principales est plus grand, est désignée par B, A/B va de 0,55 à 0,85,
la bande de roulement est formée d'une composition de caoutchouc qui contient un caoutchouc à base de styrène butadiène ayant une teneur en styrène de 30 % en masse ou moins et une teneur en liaisons vinyliques de 40 % en masse ou moins dans une de ses parties butadiène et un caoutchouc à base d'isoprène en tant que composant de caoutchouc et qui a une tangente de perte (tan δ) mesurée dans des conditions de fréquence de 10 Hz, de contrainte initiale de 2 %, et de taux de contrainte dynamique de 1 % et présentant un pic dans une plage de -20 à 10 °C.

2. Pneumatique selon la revendication 1, dans lequel,
dans la composition de caoutchouc, un caoutchouc à base de butadiène est ajouté de manière complémentaire en tant que composant de caoutchouc, et
une quantité de caoutchouc à base de butadiène dans 100 parties en masse de composant de caoutchouc va de 10 à 30 parties en masse.

3. Pneumatique selon la revendication 1 ou la revendication 2, dans lequel la composition de caoutchouc contient de 5 à 40 parties en masse d'un composant résine par 100 parties en masse de composant de caoutchouc.

4. Pneumatique selon la revendication 3, dans lequel le composant résine est une résine à base de terpène.

5. Pneumatique selon l'une quelconque des revendications 1 à 4, dans lequel la composition de caoutchouc contient 80 parties en masse ou plus de silice par 100 parties en masse de composant de caoutchouc.

6. Pneumatique selon la revendication 5, dans lequel la silice est une silice ayant une surface spécifique par adsorption d'azote non inférieure à 150 m²/g ; la surface spécifique par adsorption d'azote étant mesurée par la méthode BET selon la norme ASTM D3037-93.

7. Pneumatique selon la revendication 5 ou la revendication 6, dans lequel la composition de caoutchouc contient un agent de couplage silane à base mercapto.

8. Pneumatique selon l'une quelconque des revendications 1 à 7, dans lequel la composition de caoutchouc est une composition de caoutchouc qui a une tangente de perte (tan δ) mesurée dans des conditions de fréquence de 10 Hz, de contrainte initiale de 2 %, et un taux de contrainte dynamique de 1 % et présentant un pic dans la plage de -15 à 5 °C.

9. Pneumatique selon la revendication 8, dans lequel la composition de caoutchouc est une composition de caoutchouc qui a une tangente de perte (tan δ) présentant un pic dans la plage de -13 à 0 °C.

10. Pneumatique selon l'une quelconque des revendications 1 à 9, dans lequel les surfaces des rainures circonférentielles principales deviennent plus petites en partant de la rainure circonférentielle principale sur le côté du plan équatorial vers la rainure circonférentielle principale sur un côté extérieur du plan équatorial.

11. Pneumatique selon l'une quelconque des revendications 1 à 10, dans lequel
la bande de roulement comporte une couche de caoutchouc de revêtement formant une surface de bande de roulement, et une couche de caoutchouc de base située à l'intérieur de la couche de caoutchouc de revêtement,
la couche de caoutchouc de revêtement est formée à partir de la composition de caoutchouc, et
un ratio Tc/Tb d'une épaisseur Tc de la couche de caoutchouc de revêtement sur une épaisseur Tb de la couche de caoutchouc de base va de 40/60 à 60/40.

12. Pneumatique selon l'une quelconque des revendications 1 à 11, dans lequel
des rainures latérales et/ou des sillons latéraux sont mis en place sur une partie de contact au sol formée par les deux rainures circonférentielles principales, de sorte à s'étendre dans une direction traversant la partie de contact au sol, et
le total des surfaces, dans la surface de contact avec le sol, des rainures latérales et/ou des sillons latéraux dans la région dans laquelle le total des surfaces des rainures circonférentielles principales est plus petit qu'un total des surfaces, dans la surface de contact avec le sol, des rainures latérales et/ou des sillons latéraux dans la région dans laquelle le total des surfaces des rainures circonférentielles principales est plus grand.
